# EUROPEAN PATENT SPECIFICATION

(11) **EP 2 811 482 B1**
(45) Date of publication and mention of the grant of the patent: **07.12.2016**
(21) Application number: 14152427.2
(22) Date of filing: 24.01.2014
(51) Int. Cl.: G09G 3/36

(54) **Touch liquid crystal display device**
Berührungsflüssigkristallanzeigevorrichtung
Appareil d'affichage tactile à cristaux liquides

(30) Priority: 06.06.2013 CN 201310223963
(43) Date of publication of application: 10.12.2014
(73) Proprietor: FocalTech Electronics Ltd., Grand Cayman KY1-1112 (KY)
(72) Inventor: Mo, Lianghua, 518057 Shenzhen Guangdong (CN); Ouyang, Guang, 518057 Shenzhen Guangdong (CN)
(74) Representative: Wilson, Gary

(56) References cited:
- US-A1- 2008 309 627
- US-A1- 2011 050 585

## Description

This application claims the priority to Chinese Patent Application No.201310223963.3, entitled "TOUCH DISPLAY APPARATUS", filed with the Chinese Patent Office on June 6, 2013.

### FIELD OF THE INVENTION

The present invention relates to the field of touch technology, and in particular to a touch display apparatus.

### BACKGROUND OF THE INVENTION

Currently, a capacitive touch screen is widely applied in various electronic products, and gradually becomes popular in the people's work and life. The size of the capacitive touch screen is continuously increased, for example, a smart mobile phone of 3-6.1 inches and a tablet of larger than 10 inches. Moreover, the application filed of the capacitive touch screen may be further extended to a smart television and the like. However, the existing capacitive touch screen generally has some problems such as poor anti-interference performance, low frame rate, larger thickness and high complexity in manufacturing process.
US2011050585 provides displays with integrated touch sensing circuitry. An integrated touch screen can include multi-function circuit elements that form part of the display circuitry of the display system that generates an image on the display, and also form part of the touch sensing circuitry of a touch sensing system that senses one or more touches on or near the display. The multi-function circuit elements can be, for example, capacitors in display pixels of an LCD that are configured to operate as display circuitry in the display system, and that may also be configured to operate as touch circuitry of the touch sensing system. For example, one or more circuit elements of the display pixel stackup can form a conductive portion of the touch sensing system, such as a charge collector, which can be operated with switches and conductive lines to sense touch.
US 2008309627 relates to adding multi-touch functionality to a display without the need of a separate multi-touch panel or layer overlaying the display. Instead, embodiments of the invention can advantageously utilize existing display circuitry to provide multi-touch functionality while adding relatively little circuitry that is specific to the multi-touch functionality. Thus, by sharing circuitry for the display and the multi-touch functionalities, embodiments of the invention can be implemented at a lower cost than the alternative of superimposing additional multi-touch related layers onto an existing display panel. Furthermore, since the display and multi-touch functionality can be implemented on the same circuit, they can be synchronized so that noise resulting from the display functionality does not detrimentally affect the multi-touch functionality and vice versa.

### SUMMARY OF THE INVENTION

In view of this, a touch display apparatus is provided according to the embodiments of the present disclosure to solve at least one of the above-mentioned problems.

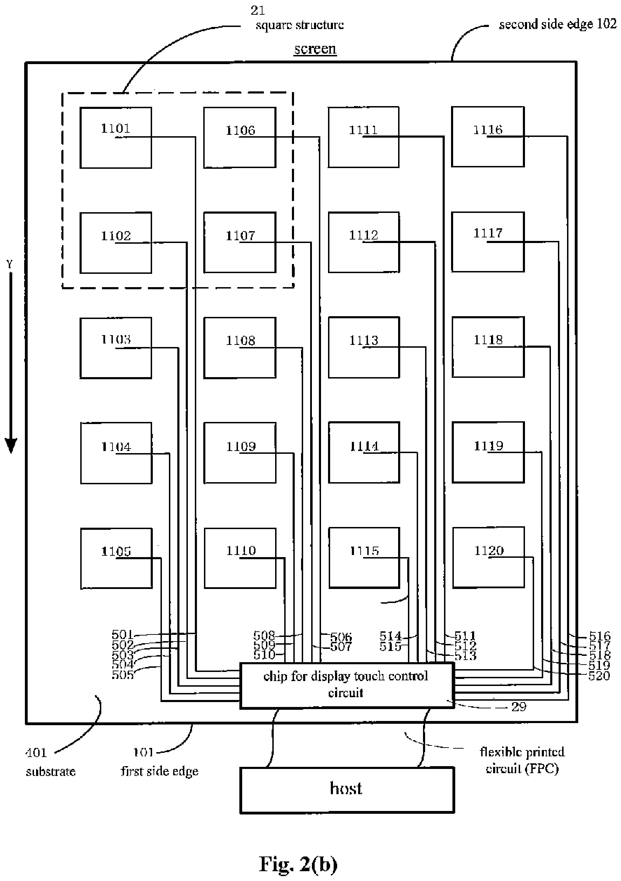

The invention is set forth in independent claim 1.
Merely the embodiments conforming with Fig. 2(b), related to the independent wires connecting the common electrodes with the touch control circuit, represent embodiments of the presently claimed invention. All other occurrences of the word "embodiment(s)" refer to examples which were originally filed but which do not represent embodiments of the presently claimed invention; these examples are still shown for illustrative purposes only.

Preferably, the wires arc disposed in a layer provided with the multiple common electrodes, or
the wires are disposed in a layer different from a layer provided with the multiple common electrodes, and arc connected to the multiple common electrodes through via holes respectively.

Preferably, the wires are disposed in a layer provided with data lines, and are connected to the multiple common electrodes through via holes.

Preferably, the wires are disposed in a layer provided with the pixel electrodes, and are connected to the multiple common electrodes through via holes.

Preferably, the wires are disposed right under a black matrix.

Preferably, the display touch control circuit is a single chip, in which the display control circuit and the touch control circuit are integrated, or
the display touch control circuit includes two or more chips, and the display control circuit and the touch control circuit are in different chips, or
the display touch control circuit includes two or more chips, and each of the chips controls a part of the display touch screen.

Preferably, the chip of the display touch control circuit is bound onto the first substrate or the second substrate in chip-on-glass mode.

Preferably, the chip of the display control circuit and the chip of the touch control circuit are bound onto the first substrate or the second substrate in chip-on-glass mode.

Preferably, the touch control circuit is adapted to detect a self-capacitance of each of the common electrodes.

Preferably, the touch control circuit is adapted to detect the self-capacitance of a current common electrode by a method including:
driving, in response to a signal applied to the current common electrode, the current common electrode and common electrodes around the current common electrode simultaneously, or
driving, in response to a signal applied to the current common electrode, the current common electrode and all the other common electrodes simultaneously.

Preferably, the touch control circuit is further adapted to drive data lines simultaneously in response to the signal applied to the current common electrode.

Preferably, the touch control circuit is adapted to determine a touch position according to a two-dimensional capacitance sensing array.

Preferably, the display touch screen has an in-plane switching structure, a fringe field switching structure, or a twisted nematic structure.

Preferably, the common electrode is in the shape of a regular polygon, or
the common electrode is in the shape of a rectangular,
the common electrode is in the shape of a circle, or
the common electrode is in the shape of an ellipse.

Concave and convex structure is provided at edges of the common electrode.

Preferably, the material of multiple common electrodes is metal oxide such as indium tin oxide or graphene.

Preferably, each of the pixel units of the display touch screen includes thin film transistors, and the source of each thin film transistor is provided with a driving circuit adapted to drive the thin film transistor through a data line.

Preferably, the touch control display apparatus includes multiple touch control circuits, and each of the touch control circuits is connected to the corresponding common electrodes in multiple common electrodes.

Preferably, the touch control circuits are clocked synchronously, or
the touch control circuits operate in a time-sharing mode.

According to the solutions of the embodiments of the present disclosure, the common electrode is also used as the touch sensing electrode. Therefore, compared with the prior art, one touch sensing electrode layer is removed in the solution of the present disclosure, thus reducing the thickness and the weight of a display touch screen and the optical loss caused by the touch sensing electrode layer, and saving the material and the manufacturing cost. Moreover, in the display touch screen according to the embodiments of the present disclosure, the touch sensing electrodes (i.e. the common electrodes in the case that the touch sensing is performed) are arranged in a two-dimensional array. Therefore, there is no mutual interference among the touch sensing electrodes, which will not cause the accumulation of noise. As a result, the noise is reduced greatly, and the signal to noise ratio is increased.

### BRIEF DESCRIPTION OF THE DRAWINGS

For clarify the technical solutions according to the embodiments of the present disclosure, the accompany drawings used in the description of the embodiments will be described briefly as follows. It is obvious that the accompany drawings in the following description arc only some embodiments of the present invention. For those skilled in the art, other accompany drawings may be obtained according to these accompany drawings without any creative work.
Figs. 1(a) and 1(b) are schematic lateral views of touch display apparatuses according to a first embodiment of the present disclosure;
Fig. 1 (c) illustrates a plane view of a common electrode layer according to the first embodiment of the present disclosure;
Fig. 1(d) illustrates an example of a display control circuit and a touch control circuit of the touch display apparatus according to the first embodiment of the present disclosure;
Fig. 1(e) is a schematic view of a display touch control circuit of the touch display apparatus according to the first embodiment of the present disclosure;
Fig. 2(a) is a schematic lateral view of a touch display apparatus according to a second embodiment of the present disclosure;
Fig. 2(b) illustrates a plane view of a common electrode layer according to the second embodiment of the present disclosure;
Fig. 3 illustrates an example of wiring according to the second embodiment of the present disclosure;
Fig. 4 illustrates an example of wiring according to a third embodiment of the present disclosure;
Fig. 5 illustrates an example of wiring according to a fourth embodiment of the present disclosure;
Figs. 6(a) and 6(b) illustrate examples of wiring according to a fifth embodiment of the present disclosure;
Fig. 7 is a schematic lateral view of a touch display apparatus according to a sixth embodiment of the present disclosure;
Fig. 8 illustrates an example of wiring according to the sixth embodiment of the present disclosure;
Fig. 9 illustrates an example of wiring according to a seventh embodiment of the present disclosure; and
Figs. 10(a) and 10(b) illustrate touch display apparatuses according to an eighth embodiment of the present disclosure.

### DETAILED DESCRIPTION OF THE INVENTION

In order that the purpose, features and advantages of the present disclosure can be more apparent and be better understood, in the following, technical solutions of the present disclosure will he described in conjunction with the accompanying drawings in the embodiments of the present disclosure. It is obvious that the described embodiments arc only a part of the embodiments of the present invention. All the other embodiments obtained by those skilled in the art based on the embodiments of the present disclosure without any creative work belong to the scope of protection of the present invention. For case of illustration, sectional views showing the structure are enlarged partially on the usual scale, and the views are only examples, which should not be understood as limiting the scope of protection of the present invention. Furthermore, in an actual manufacturing process, three-dimensional space sizes, i.e. length, width and depth should be considered.

### First Embodiment

A touch display apparatus according to a first embodiment of the present disclosure includes:
a display touch screen including a first substrate 11, a second substrate 13, a liquid crystal layer 15 and multiple pixel units, in which the liquid crystal layer 15 and the multiple pixel units arc sandwiched between the first substrate and the second substrate, the display touch screen further includes multiple common electrodes 17 arranged in a two-dimensional array, and
a display touch control circuit including a display control circuit and a touch control circuit, in which the display touch control circuit is connected to the multiple common electrodes through wires in such a way that the multiple common electrodes is connected to a common level provided to the display control circuit in the case that a display is performed, and each of the multiple common electrodes is connected to the touch control circut as a touch sensing electrode in the case that a touch sensing is performed.

The display touch screen may have an in-plane switching (abbreviated as IPS) structure, a fringe field switching (abbreviated as FFS) structure, or a twisted nematic (abbreviated as TN) structure.

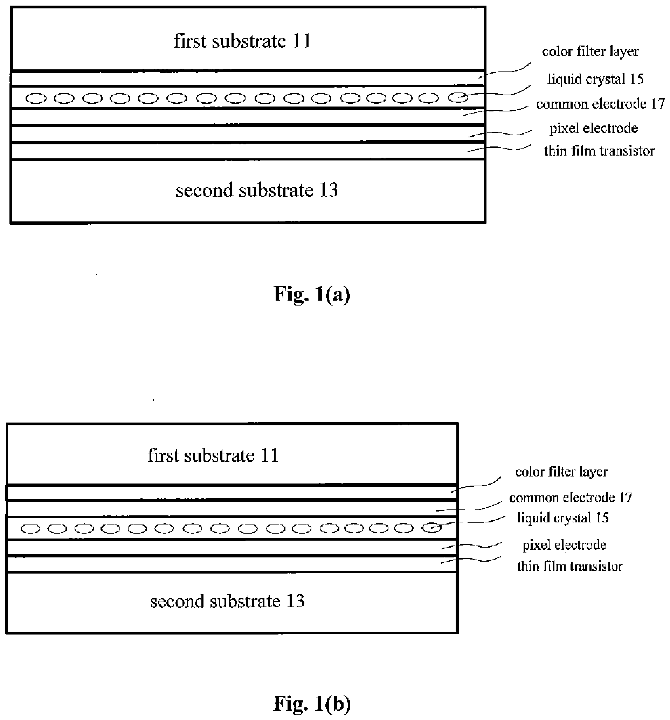

Fig. 1(a) is a schematic lateral view of an example of the touch display apparatus according to the first embodiment of the present disclosure. The touch display apparatus may have the IPS or FFS structure.

Fig. 1(b) is a schematic lateral view of another example of the touch display apparatus according to the first embodiment of the present disclosure. The touch control display apparatus may have the TN structure.

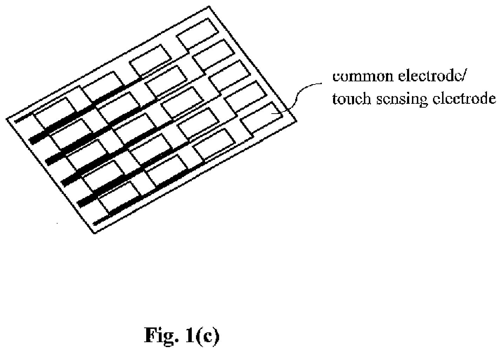

Fig. 1(c) illustrates an example of a common electrode layer of the touch display apparatus according to the first embodiment of the present disclosure. Those skilled in the art should be understood that the shape of the common electrode may be a circle, an ellipse, a triangle, a strip shape, a square or other regular polygon. Moreover, some teeth may be provided at the edges of the common electrode. Preferably, the material of multiple common electrodes is metal oxide such as indium tin oxide (ITO) or graphene.

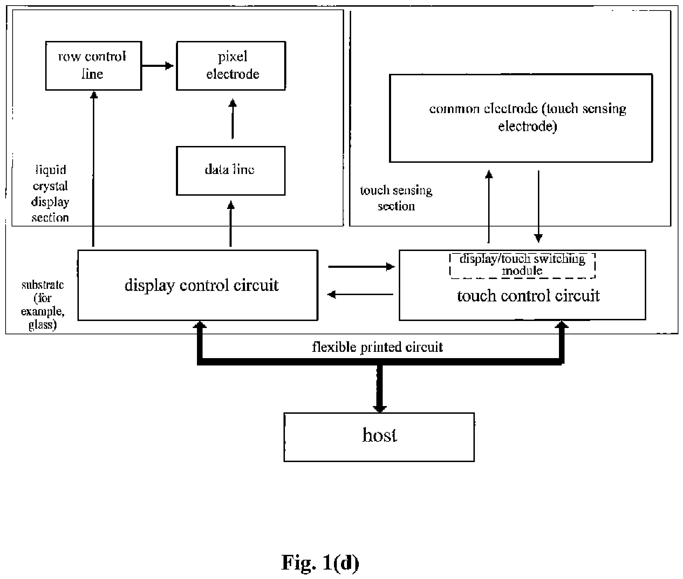

Fig. 1(d) illustrates an example of a display control circuit and a touch control circuit of the touch display apparatus according to the first embodiment of the present disclosure. In the present example, the touch display apparatus may be connected to a host through a flexible printed circuit. As illustrated in Fig. 1(d), the display control circuit and the touch control circuit are provided at two independent chips respectively. The display control circuit is connected to data lines and row gate lines of a liquid crystal display section of the touch display apparatus through wires. The touch control circuit is connected to touch sensing electrodes (the common electrodes) of a touch sensing section through wires. By means of a display/touch switching module in the touch control circuit, multiple common electrodes are connected to a common level provided to the display control circuit in the case that a display is performed, and each of multiple common electrodes is connected to the touch control circuit as the touch sensing electrode in the case that a touch sensing is performed.

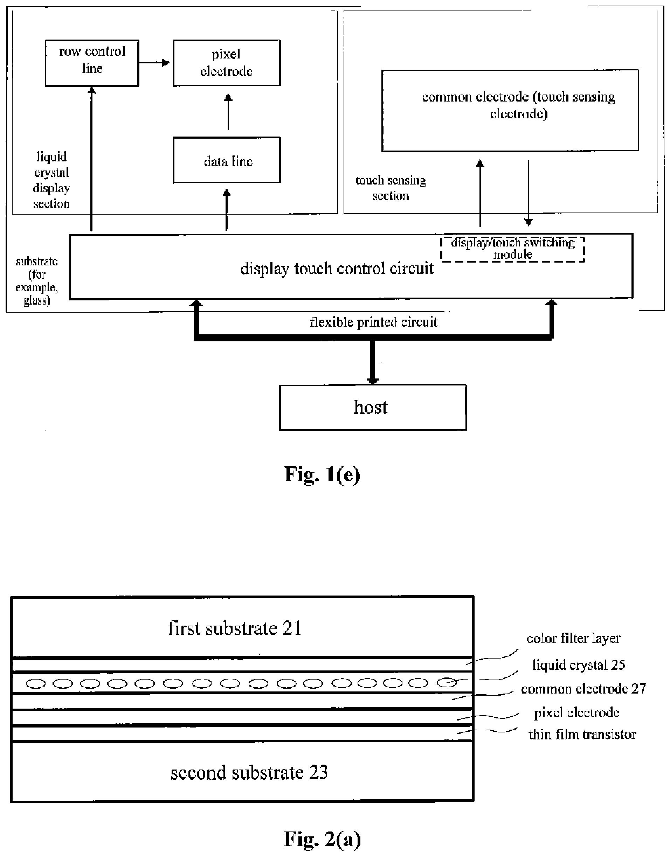

Fig. 1(e) illustrates another example of the display touch control circuit of the touch display apparatus according to the first embodiment of the present disclosure. In the present example, the touch display apparatus may be connected to a host through a flexible printed circuit. As illustrated in Fig. 1(e), the display touch control circuit is a single chip, and the display touch control circuit is connected to data lines and row gate lines of a liquid crystal display section and touch sensing electrodes (the common electrodes) of a touch sensing section. By means of a display/touch switching module in the display touch control circuit, multiple common electrodes are connected to a common level provided to the display control circuit in the case that a display is performed, and each of multiple common electrodes is connected to the touch control circuit as the touch sensing electrode in the case that a touch sensing is performed.

In the case that the display is performed, the common electrode is a part of a display module of the display touch screen. Specifically, the common electrode is driven by the common level (Vcom). The common electrode, in combination with different pixel units, creates an electric field across the liquid crystal material at different regions on the screen, so as to control luminous flux of each pixel unit.

Preferably, the pixel unit includes pixel transistors and pixel electrodes. For a color display module, each pixel unit generally includes three sub pixel units respectively corresponding to red, green and blue, and each of the sub pixel units includes a pixel transistor and a pixel electrode.

Preferably, the pixel transistor is a thin film transistor (TFT).

In the case that the touch sensing is performed, the common electrode is also used as the touch sensing electrode for sensing a touch on the screen. The capacitance of the common electrode is changed when the touch screen is touched.

Preferably, a touch position is determined by detecting a self-capacitance of each of the common electrodes. As an example, the self-capacitance of the common electrode may be the capacitance of the common electrode to the ground.

In a display touch screen in the prior art, the touch sensing electrodes are separated from a display module, and the display touch screen is formed by superposing a touch screen and a display screen. However, according to the solutions of the embodiments of the present disclosure, the common electrode is also used as the touch sensing electrode. Therefore, compared with the prior art, a touch sensing electrode layer is removed in the solution of the present disclosure, thus reducing the thickness and the weight of the display touch screen and the optical loss caused by the touch sensing electrode layer, and saving the material and the manufacturing cost. Moreover, with the solutions of the embodiments of the present disclosure, the electrical interference between the touch sensing electrode and the display module in the prior art is further reduced.

Furthermore, in the display touch screen in the prior art, the touch sensing electrodes include a row electrode and a column electrode, and noises may be superposed at each row or each column. For example, in the case where multiple fingers are placed in a same row or a same column, the power supply noise induced by each of the lingers may be superposed in the same row or the same column. The more fingers, the lager the superposed noise. However, in the display touch screen according to the embodiments of the present disclosure, the touch sensing electrode (i.e. the common electrodes in the touch sensing process) are arranged in a two-dimensional array. Each of the touch sensing electrodes is a unit in the array. There is no mutual interference among the units. Matrix units in each row or each column arc different, which will not cause the superposition of noises. Therefore, in the touch display apparatus according to the embodiments of the present disclosure, the amplitude of the greatest noise is greatly reduced and a signal to noise ratio is increased.

Preferably, the touch control circuit is configured to detect the self-capacitance of each of the common electrodes. As an example, the self-capacitance of the common electrode may be the capacitance of the common electrode to the ground.

For each of the common electrodes, when driving the common electrode, the touch control circuit may drive, in response to a signal driving the current common electrode, common electrodes around the current common electrode or the other common electrodes except the current common electrode simultaneously. Moreover, when driving the common electrode, the touch control circuit may also drive the data line simultaneously, in response to a signal driving the current common electrode. In this way, a voltage difference between the detected common electrode and the non-detected common electrode may be reduced, so as to reduce the capacitance of the detected electrode and to prevent a false touch formed by a drip.

Optionally, the touch control circuit includes: a signal driving/receiving unit adapted to drive each of the common electrodes and to receive sensed data from each of the common electrodes; and a signal processing unit adapted to determine a touch position according to the sensed data. Specifically, for each of the common electrodes, the signal driving/receiving unit may be adapted to drive, in response to a signal driving a current common electrode, common electrodes around the current common electrode or the other common electrodes except the current common electrode simultaneously when the signal driving/receiving unit drives the current common electrode. Moreover, for each of the common electrodes, the signal driving/receiving unit may also be configured to drive a data line simultaneously in response to a signal driving a current common electrode, when the signal driving/receiving unit drives the current common electrode.

Preferably, the touch control circuit is configured to determine the touch position according to a two-dimensional capacitance variation array.

Moreover, the common electrodes may be driven simultaneously or in groups. That is, all of the common electrodes or a part of the common electrodes are detected together.

In the prior art, since the touch sensing electrodes include the row electrodes and the column electrodes, a progressive scan is adopted and a touch detection time for each frame is long. This shortcoming will especially bring negative effects on an In-Cell touch screen. In order to reduce the mutual interference between the operated display screen and the operated touch screen, the operation of the touch screen is stopped when the display screen is operated, and the operation of the display screen is stopped when the touch screen is operated. For example, the In-Cell screen with a working frequency of 60Hz (i.e. 16.7ms per frame) generally needs a scanning time for the display of 10-12ms. Thus, the scanning time for detecting the touch is very short, leading to a lower signal to noise ratio for the existing In-Cell screen. However, in the touch display apparatus according to the embodiments of the present disclosure, each of the electrodes is connected to a touch detection chip. By using a parallel scanning mode, the scanning time for detecting the touch may theoretically be equal to the time for detecting one row in the prior art, which may achieve the signal to noise ratio in the prior art. For example, for an In-Cell touch screen with 16 rows and 28 columns, it is assumed that the time for detecting each row is T, and then 16Ts are spent in scanning the existing structure. However, the shortest time for detecting the touch for each frame is only IT, according to the structure of the embodiments of the present disclosure.

The display touch control circuit may be configured to execute repeatedly a first step. The first step includes: performing a frame scan by the display control circuit and then performing a frame scan by the touch control circuit. That is to say, the display scanning is performed for one frame, and then the touch detection scanning is performed for the frame, and over and over again.

Alternatively, the display touch control circuit is configured to execute repeatedly a second step. The second step includes: performing a frame scan by the touch control circuit and then performing a frame scan by the display control circuit. That is to say, the touch detection scanning is performed for one frame, and then the display scanning is performed for the frame, and over and over again.

Furthermore, for each frame, the display scanning may be divided into multiple segments, the touch detection scanning is performed in each of the segments. In this way, the frequency of the touch detection is multiple times as large as the frequency of the display. Therefore, the frame rate of the touch detection is increased. In other words, each frame scan performed by the display control circuit is divided into multiple segments, and the touch control circuit performs the scan every time before and after the scan performed by the display control circuit and between the segments.

### Second Embodiment

Fig. 2(a) is a schematic lateral view of an example of a touch display apparatus according to the second embodiment of the present disclosure.

As illustrated in Fig. 2(a), the touch display apparatus includes a first substrate 21, a second substrate 23, a liquid crystal layer 25, a common electrode layer 27, a thin film transistor layer and a color filter (CF) layer, in which the liquid crystal layer 25, the common electrode layer 27, the thin film transistor layer and the CF layer are disposed between the first substrate 21 and the second substrate 23. The common electrode layer is disposed on the side of the thin film transistor layer facing to the liquid crystal layer. Optionally, the touch display apparatus further includes a second polarizing layer, a first polarizing layer and a cover lens. As an example, the touch display apparatus has an IPS structure. The touch display apparatus may also have an FFS structure in the present embodiment.

Multiple pixel units are formed in the thin film transistor layer.

Multiple common electrodes are formed in the common electrode layer, and the multiple common electrodes are arranged in a two-dimensional array, such as a matrix array. Fig. 2(b) illustrates a plane view of an example of the common electrode layer according to the second embodiment of the present disclosure.

The touch display apparatus further includes a display touch control circuit. The display touch control circuit includes a display control circuit and a touch control circuit. The display touch control circuit is connected to the multiple common electrodes through wires in such a way that the multiple common electrodes are connected to a common level provided to the display control circuit in the case that a display is performed, and each of the multiple common electrodes is connected to the touch control circuit as a touch sensing electrode in the case that a touch sensing is performed.

As illustrated in Fig. 2(b), as an example, the common electrode layer includes the multiple common electrodes (touch sensing electrodes) 1101-1120. As an example, Fig. 2(b) further illustrates a flexible printed circuit (FPC), a display touch control circuit 29 and a host. In the present example, the touch display apparatus may be connected to the host through the flexible printed circuit. Preferably, the material of the common electrode is metal oxide such as indium tin oxide (ITO) or graphcnc.

The common electrode may be in the shape of a square, a rectangle, a strip, a diamond or any of other polygons; and may also be in the shape of a triangle, a circle or an ellipse. Furthermore, some teeth may be provided at the edges of the common electrode. The patterns of the common electrodes may be consistent or inconsistent. As an example, in Fig. 2(b), the common electrodes are all in the shape of a square (for example, both the length and the with are equal to 5mm), and the common electrodes are arranged in a rectangular array.

In the present embodiment, wires 501-520 for connecting the common electrodes 1101-1120 to the display touch control circuit are disposed in the common electrode layer. For example, the common electrode layer has a first side edge 101 and a second side edge 102. The wire 501 connected to the common electrode 1101 extends towards the first side edge 101 in a Y direction inside the common electrode layer; the wire 502 connected to the common electrode 1102 extends towards the first side edge 101 in the Y direction inside the common electrode layer, and so on. The design of the disposition of the wires 501-520 in the common electrode layer has a simple structure and the low cost.

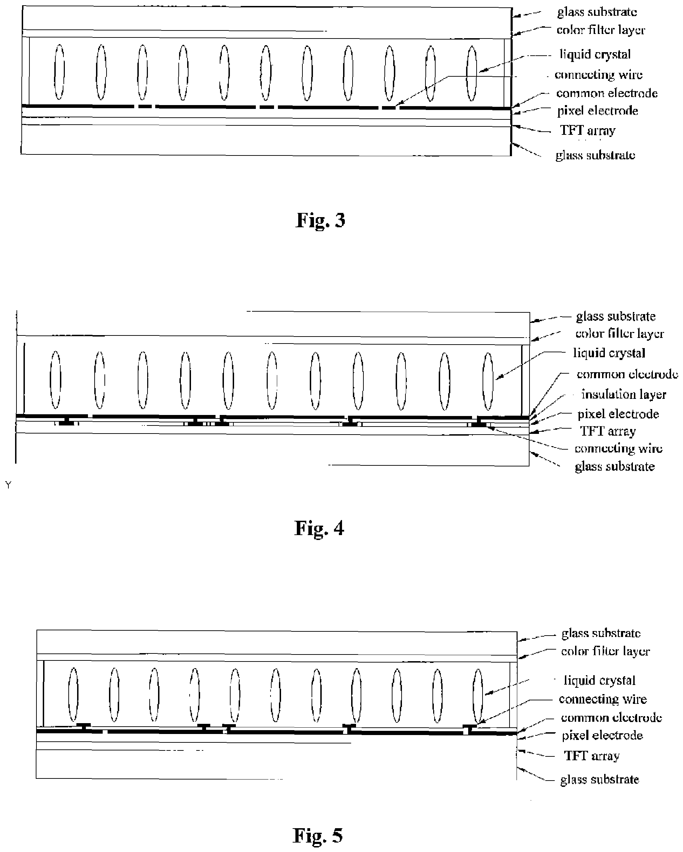

Fig. 3 illustrates an example of wiring according to the second embodiment of the present disclosure.

The material of the wires 501-520 may be metal oxide such as indium tin oxide (ITO) or graphene, or may be a metal. Preferably, the wires 501-520 are disposed in a layer provided with the common electrode, and arc located right under a black matrix. By disposing the wires under the black matrix, a light reflection probably caused by the metal wires and a trace generated by etching the indium tin oxide may be avoided.

Preferably, the chip 29 for the display touch control circuit in Fig. 2(b) is bound onto the substrate in a chip-on-glass (abbreviated as COG) mode. For example, in a screen of 5 inches, it is assumed that each of the common electrodes (including the corresponding wire) has an area of 5mm×5mm, and the screen includes 264 common electrodes. The chip 29 for the display touch control circuit packaged in the conventional mode needs at least 264 pins, so that the chip can only be surface-mounted on a printed circuit board. In this case, a very wide flexible printed circuit is necessary. Therefore, the yield is low, and the cost is high. However, by using the COG mode, the chip 29 for the display touch control circuit is directly bound onto the substrate. In such a way, the yield is increased, the package cost is reduced, and the volume of the touch display apparatus is reduced.

Optionally, the display touch control circuit 29 is connected to the host through the flexible printed circuit. The host communicates with the display touch control circuit 29 through the flexible printed circuit.

Generally, the change in the capacitance of the touch sensing electrode when the touch occurs is proportional to the covered area of the touch sensing electrode. Therefore, the change in the capacitance of each touch sensing electrode indicates the covered area. As an example, by using a ccntroid algorithm, a touch position is determined according to a two-dimensional capacitance variation array.

The display touch control circuit 29 may be a single chip, in which the display control circuit and the touch control circuit are integrated. Alternatively, the display touch control circuit 29 may include two or more chips, and the display control circuit and the touch control circuit are provided in different chips.

Preferably, in the touch display apparatus according to the embodiments of the present disclosure, a driving circuit is provided for the source electrode of each of the thin film transistors, and the driving circuit drives the thin film transistor through a data line. In this way, the electric field distribution in the liquid crystal layer may be changed by adjusting the voltage of the source electrode of the thin film transistor, so as to reduce the self-capacitance of the common electrode and increase the sensitivity of touch control.

### Third Embodiment

A touch display apparatus according to the present embodiment also has an IPS structure or FFS structure. The difference between this embodiment and the second embodiment lies in the position of wiring. Fig. 4 illustrates an example of wiring according to the third embodiment of the present disclosure, in which wires 501-503 are disposed in a layer different from the layer provided with common electrodes. Specifically, the wires are disposed in a layer provided with pixel electrodes, and the wires may be connected to the respective common electrodes through via holes.

The material of the wires 501-503 may be metal oxide such as indium tin oxide (ITO) or graphene, or may be a metal. Preferably, the wires 501-503 are disposed right under a black matrix. By disposing the wires under the black matrix, a light reflection probably caused by the metal wires and a trace generated by etching the indium tin oxide may be avoided.

The description of the other parts of the present embodiment refers to the second embodiment, which is not repeated herein.

### Fourth Embodiment

The difference between this embodiment and the third embodiment lies in the position of wiring. Fig. 5 illustrates an example of wiring according to the fourth embodiment of the present disclosure, in which wires 501-503 are disposed in a layer different from the layer provided with common electrodes. Specifically, the wires are disposed in an individual layer, which may be connected to the respective common electrodes through via holes.

The description of the other parts of the present embodiment refers to the third embodiment, which is not repeated herein.

### Fifth Embodiment

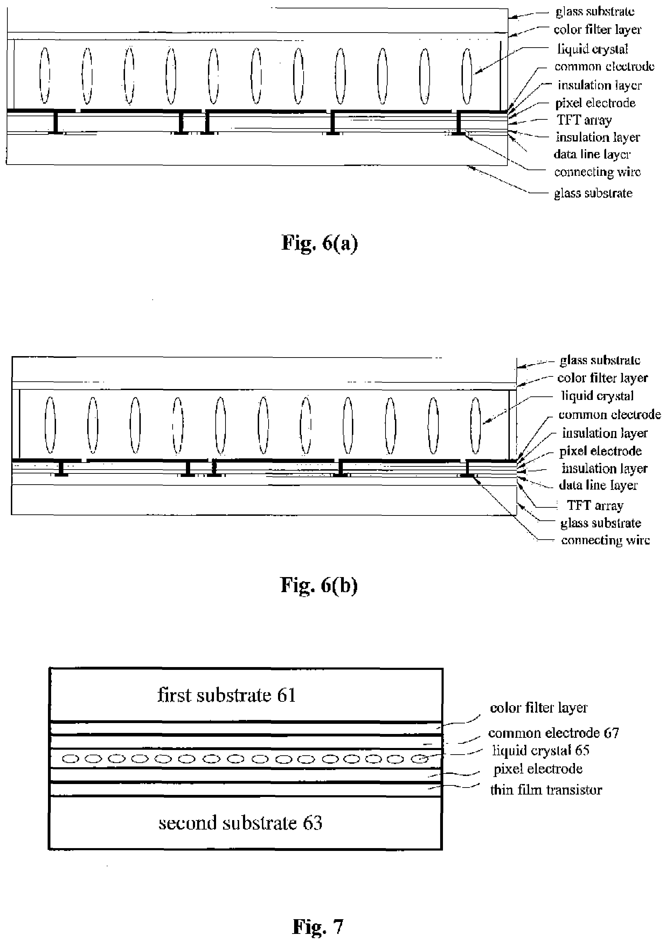

The difference between this embodiment and the fourth embodiment lies in the position of wiring. Figs. 6(a) and 6(b) illustrate examples of wiring according to the fifth embodiment of the present disclosure, in which wires 501-503 are disposed in a layer different from the layer provided with common electrodes. Specifically, the wires are disposed in a layer provided with data lines. As illustrated in Fig. 6(a), a data line layer is located under a TFT array. As illustrated in Fig. 6(b), the data line layer is located on a TFT array. The wires may be connected to the respective common electrodes through via holes.

The description of the other parts of the present embodiment refers to the fourth embodiment, which is not repeated herein.

### Sixth Embodiment

Fig. 7 is a schematic lateral view of a touch display apparatus according to the sixth embodiment of the present disclosure. As illustrated in Fig. 7, the touch display apparatus includes a first substrate 61, a second substrate 63, a liquid crystal layer 65, a common electrode layer 67, a thin film transistor layer and a color filter layer, in which the liquid crystal layer 65, the common electrode layer 67, the thin film transistor layer and the color filter layer arc disposed between the first substrate 61 and the second substrate 63. The common electrode layer is disposed on a side of the color filter layer facing to the liquid crystal layer. Optionally, the touch display apparatus further includes a second polarizing layer, a first polarizing layer and a cover lens. As an example, the touch display apparatus has a TN structure.

Multiple pixel units are formed in the thin film transistor layer. Multiple common electrodes are formed in the common electrode layer, and the multiple common electrodes are arranged in a two-dimensional array.

The touch display apparatus further includes a display touch control circuit. The display touch control circuit includes a display control circuit and a touch control circuit. The display touch control circuit is connected to the multiple common electrodes through wires in such a way that the multiple common electrodes are connected to a common level provided to the display control circuit in the case that a display is performed, and each of the multiple common electrodes is connected to the touch control circuit as a touch sensing electrode in a the case that a touch sensing is performed.

A chip for the touch control circuit may be bound onto the substrate in a COG mode.

A plane view nf the common electrode layer of the present embodiment is the same as or similar to that of the second embodiment. As illustrated in Fig. 2(b), the common electrode layer includes the multiple common electrodes (touch sensing electrodes).

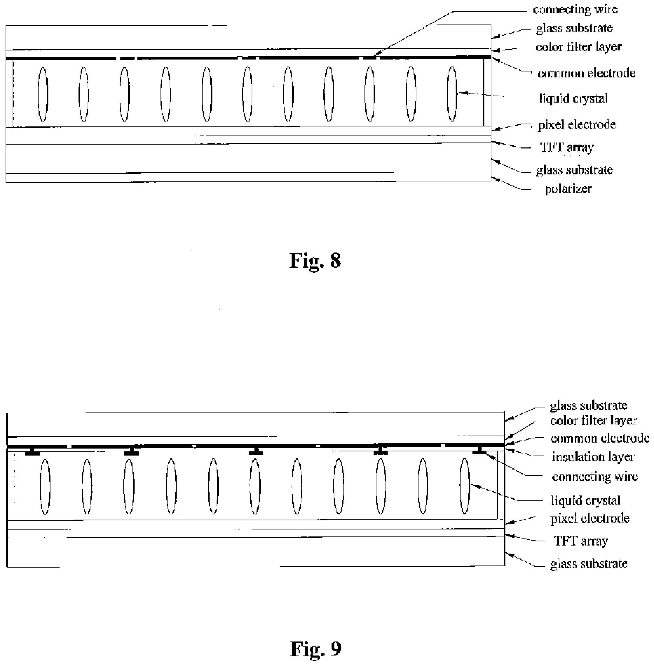

Fig. 8 illustrates an example of wiring according to the sixth embodiment of the present disclosure.

In the present embodiment, wires 501-520 for connecting common electrodes 1101-1120 to the display touch control circuit are disposed in the common electrode layer. For example, the common electrode layer has a first side edge 101 and a second side edge 102. The wire 501 connected to the common electrode 1101 extends towards the first side edge 101 in a Y direction inside the common electrode layer; the wire 502 connected to the common electrode 1102 extends towards the first side edge 101 in the Y direction inside the common electrode layer, and so on.

The description of the other parts of the present embodiment refers to the second embodiment, which is not repeated herein.

### Seventh Embodiment

A touch display apparatus according to the present embodiment also has a TN structure. The difference between this embodiment and the sixth embodiment lies in the position of wiring. Fig. 9 illustrates an example of wiring according to the seventh embodiment of the present disclosure, in which wires 501-503 are disposed in a layer different from the layer provided with common electrodes. Specifically, the wires are disposed in an individual layer, and the wires may be connected to the respective common electrodes through via holes.

The description of the other parts of the present embodiment refers to the sixth embodiment, which is not repeated herein.

### Eighth Embodiment

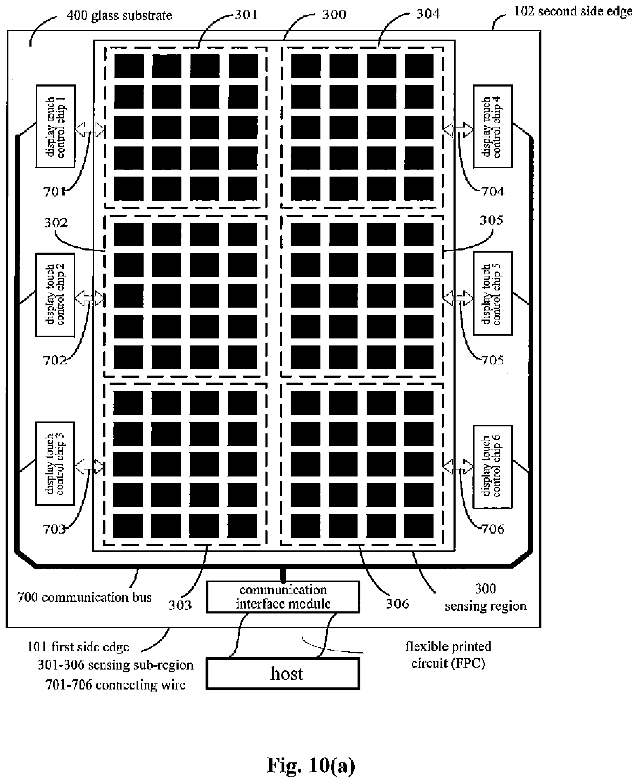

Fig. 10(a) illustrates a touch display apparatus according to the eighth embodiment of the present disclosure. This embodiment differs from the prior embodiments in that the display touch control chips arc provided at two or more chips and each of the chips is adapted to control a corresponding region of a display touch screen.

As an example, a common electrode layer is divided into multiple sub-regions. Each of the sub-regions includes multiple common electrodes arranged in a two-dimensional array and connected to one display touch control chip.

Each of the display touch control chips may be clocked synchronously. Alternatively, the display touch control chips may operate in a time-sharing mode.

As illustrated in Fig. 10(a), the common electrode layer includes multiple sub-regions 301-306, and each of the sub-regions includes multiple common electrodes. The shape of the common electrode is a square, a diamond or other polygon, or is a triangle, a circle or an ellipse. Moreover, some leeth may be provided at edges of the common electrode. For each of the sub-regions, the patterns of the common electrodes may be consistent or inconsistent. Preferably, the material of the common electrode is metal oxide such as indium tin oxide (ITO) or graphene, or is a conductive material such as a metal.

For each of the sub-regions, each of the common electrodes may be respectively connected to one of display touch control chips 1-6 corresponding to the common electrode through a wire. The display touch control chips 1-6 may be bound onto a first substrate or a second substrate in a COG mode.

The display touch control chips 1-6 may be connected to a communication bus connecting terminal through a communication bus 700, and the communication bus connecting terminal may be connected to a host through a flexible printed circuit 13. Preferably, the communication bus 700 is disposed in a non-transparent region except a sensing region, and may be a metal oxide line such as indium tin oxide (ITO) line or graphene line, and may also be a metal line.

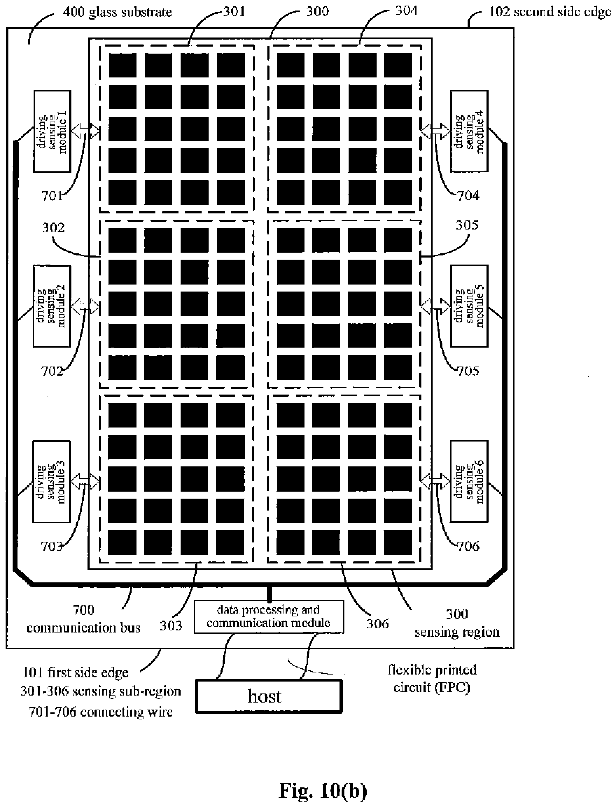

Fig. 10(b) illustrates another touch display apparatus according to the seventh embodiment of the present disclosure. This embodiment differs from the embodiment described in Fig. 10(a) in that the driving sensing modules are provided at two or more chips and each of the modules is adapted to control a corresponding region of the display touch screen.

As an example, a common electrode layer is divided into multiple sub-regions. Each of the sub-regions includes multiple common electrodes arranged in a two-dimensional array and connected to one driving sensing module.

The driving sensing modules may be clocked synchronously. Alternatively, the driving sensing modules may operate in a time-sharing mode.

As illustrated in Fig. 10(b), the common electrode layer includes multiple sub-regions 301-306, and each of the sub-regions includes multiple common electrodes. The shape of the common electrode is a square, a diamond or other polygon, or is a triangle, a circle or an ellipse. Some teeth may be provided at edges of the common electrode. For each of the sub-regions, the patterns of the respective common electrodes may be consistent or inconsistent. Preferably, the material of the common electrode is metal oxide such as indium tin oxide (ITO) or graphene.

For each of the sub-regions, each of the common electrodes may he respectively connected to one of driving sensing modules 1-6 corresponding to the common electrode through a wire. The driving sensing modules 1-6 may be bound onto a substrate in a COG mode.

The driving sensing modules 1-6 may be connected to a data processing and communication module through a communication bus 700, and the data processing and communication module may be connected to a host through a flexible printed circuit 13. Preferably, the communication bus 700 is disposed in a non-transparent region except a sensing region, and may be a metal oxide line such as indium tin oxide (ITO) line or graphene line, and may also be a metal line.

The present embodiment is particularly suitable for a large-size screen. The two or more display touch control chips may scan a touch panel simultaneously. Therefore, a good image capture rate may be achieved.

In the description, the emphasis is placed on difference between the embodiments. For the same or similar parts among the embodiments, they can be referred to from one another.

The above description of the embodiments disclosed herein enables those skilled in the art to implement or use the present invention. Therefore, the present invention will not be limited to the embodiments described herein, but in accordance with the widest scope consistent with the principle and novel features disclosed herein.

## Claims

1. A touch display apparatus, characterized comprising:
a display touch screen comprising a first substrate (11, 21), a second substrate (13, 23), a liquid crystal layer (15, 25) and a plurality of pixel units, wherein each of the pixel units comprises a pixel electrode and wherein the liquid crystal layer (15, 25) and the pixel units are located between the first substrate and the second substrate, and the display touch screen further comprises a plurality of common electrodes (17, 1101-1120) arranged in a two-dimensional array, wherein the common electrodes (17, 1101-1120) are arranged so as to create in combination with the different pixel units an electric field across the liquid crystal material, so as to control luminuous flux of each pixel unit, and
a display touch control circuit comprising a display control circuit and a touch control circuit, wherein the display touch control circuit is connected to the plurality of common electrodes (17, 1101-1120) through wires, and wherein the plurality of common electrodes (17, 1101-1120) are connected to a common level provided to the display control circuit during a phase of displaying, **characterized in that** each of the plurality of common electrodes (17, 1101-1120) is connected to the touch control circuit via an independent wire (501 - 520) as a touch sensing electrode during a phase of touch sensing.

2. The touch display apparatus according to claim 1, wherein the wires (501-520) are disposed in a layer provided with the plurality of common electrodes (1101-1120), or the wires (501-503) are disposed in a layer different from a layer provided with the plurality of common electrodes and are connected to the plurality of common electrodes through via holes.

3. The touch display apparatus according to claim 1, wherein the wires (501-520) are disposed in a layer provided with data lines, and are connected to the plurality of common electrodes (17, 1101-1120) through via holes.

4. The touch display apparatus according to claim 1, wherein the wires (501-520) are disposed in a layer provided with the pixel electrodes and are connected to the plurality of common electrodes through via holes.

5. The touch display apparatus according to claim 1, wherein the wires (501-520) are disposed right under a black matrix.

6. The touch display apparatus according to claim 1, wherein the display touch control circuit (29) is a single chip, and the display control circuit and the touch control circuit are integrated in the single chip, the display touch control circuit comprises two or more chips, and the display control circuit and the touch control circuit are in different chips, or
the display touch control circuit comprises two or more chips, and each of the chips controls a part of the display touch screen; and optionally
wherein the chip for the display touch control circuit is bound onto the first substrate or the second substrate in chip-on-glass mode, or the chip for the display control circuit and the chip for the touch control circuit are bound onto the first substrate or the second substrate in chip-on-glass mode.

7. The touch display apparatus according to claim 1, wherein the touch control circuit is adapted to detect a self-capacitance of each of the common electrodes (17, 1101-1120); and optionally
wherein the touch control circuit is adapted to detect the self-capacitance of a current common electrode by a method comprising:
driving, in response to a signal applied to the current common electrode, the current common electrode and common electrodes around the current common electrode simultaneously, or
driving, in response to a signal applied to the current common electrode, the current common electrode and all the other common electrodes simultaneously.

8. The touch display apparatus according to claim 7, wherein the touch control circuit is adapted to drive data lines simultaneously in response to the signal applied to the current common electrode.

9. The touch display apparatus according to claim 7, wherein the touch control circuit is adapted to determine a touch position according to a two-dimensional capacitance sensing array.

10. The touch display apparatus according to claim 1, wherein the display touch screen has an in-plane switching structure, a fringe field switching structure or a twisted nematic structure.

11. The touch display apparatus according to claim 1, wherein the common electrode (17, 1101-1120) is in the shape of a regular polygon, the common electrode (17, 1101-1120) is in the shape of a rectangular, or the common electrode(17, 1101-1120) is in the shape of a circle, or the common electrode is in the shape of an ellipse.

12. The touch display apparatus according to claim 1, wherein concave and convex structure is provided at edges of the common electrode (17, 1101-1120).

13. The touch display apparatus according to claim 1, wherein the material of the plurality of common electrodes (17, 1101-1120) is indium tin oxide or grapheme; and optionally
wherein each of the pixel units of the display touch screen comprises a thin film transistor, the source of the thin film transistor is provided with a driving circuit adapted to drive the thin film transistor through a data line.

14. The touch display apparatus according to claim 1, wherein the touch display apparatus comprises a plurality of touch control circuits, and each of the touch control circuits is connected to corresponding common electrodes in the plurality of common electrodes (17, 1101-1120); and optionally
wherein the touch control circuits are clocked synchronously, or the touch control circuits operate in a time-sharing mode.

15. The touch display apparatus according to claim 1, wherein the display touch control circuit is adapted to execute repeatedly a first step comprising: performing a scan by the display control circuit and then performing a scan by the touch control circuit, or
the display touch control circuit is adapted to execute repeatedly a second step comprising: performing a scan by the touch control circuit and then performing a scan by the display control circuit; and optionally
wherein the display touch control circuit is configured to divide a frame scan performed by the display control circuit into a plurality of segments, and perform a scan by the touch control circuit every time before the frame scan, between the segments, and after the frame scan performed by the display control circuit.

## Patentansprüche

1. Touch-Display-Vorrichtung, **gekennzeichnet dadurch, dass** sie Folgendes beinhaltet:
einen Display-Touchscreen, der ein erstes Substrat (11, 21), ein zweites Substrat (13, 23), eine Flüssigkristallschicht (15, 25) und eine Vielzahl von Pixeleinheiten beinhaltet, wobei jede der Pixeleinheiten eine Pixelelektrode beinhaltet und wobei sich die Flüssigkristallschicht (15, 25) und die Pixeleinheiten zwischen dem ersten Substrat und dem zweiten Substrat befinden, und der Display-Touchscreen ferner eine Vielzahl von gemeinsamen Elektroden (17, 1101-1120) beinhaltet, die in einer zweidimensionalen Anordnung angeordnet sind, wobei die gemeinsamen Elektroden (17, 1101-1120) so angeordnet sind, dass in Kombination mit den verschiedenen Pixeleinheiten ein elektrisches Feld über dem Flüssigkristallmaterial erzeugt wird, um den Lichtstrom von jeder Pixeleinheit zu steuern, und
einen Display-Touch-Steuerkreis, der einen Display-Steuerkreis und einen Touch-Steuerkreis beinhaltet, wobei der Display-Touch-Steuerkreis über Drähte mit der Vielzahl von gemeinsamen Elektroden (17, 1101-1120) verbunden ist, und wobei die Vielzahl von gemeinsamen Elektroden (17, 1101-1120) mit einem gemeinsamen Pegel verbunden sind, der dem Display-Steuerkreis während einer Phase des Anzeigens bereitgestellt wird, **dadurch gekennzeichnet, dass** jede der Vielzahl von gemeinsamen Elektroden (17, 1101-1120) während einer Phase des Touch-Messens über einen unabhängigen Draht (501-520) als Touch-Messelektrode mit dem Touch-Steuerkreis verbunden ist.

2. Touch-Display-Vorrichtung gemäß Anspruch 1, wobei die Drähte (501-520) in einer mit der Vielzahl von gemeinsamen Elektroden versehenen Schicht (1101-1120) vorliegen oder die Drähte (501-503) in einer Schicht vorliegen, die sich von einer mit der Vielzahl von gemeinsamen Elektroden versehenen Schicht unterscheidet, und mit der Vielzahl von gemeinsamen Elektroden über Durchgangslöcher verbunden sind.

3. Touch-Display-Vorrichtung gemäß Anspruch 1, wobei die Drähte (501-520) in einer mit Datenleitungen versehenen Schicht vorliegen und mit der Vielzahl von gemeinsamen Elektroden (17, 1101-1120) über Durchgangslöcher verbunden sind.

4. Touch-Display-Vorrichtung gemäß Anspruch 1, wobei die Drähte (501-520) in einer mit den Pixelelektroden versehenen Schicht vorliegen und mit der Vielzahl von gemeinsamen Elektroden über Durchgangslöcher verbunden sind.

5. Touch-Display-Vorrichtung gemäß Anspruch 1, wobei die Drähte (501-520) direkt unter einer schwarzen Matrix vorliegen.

6. Touch-Display-Vorrichtung gemäß Anspruch 1, wobei der Display-Touch-Steuerkreis (29) ein einzelner Chip ist und der Display-Steuerkreis und der Touch-Steuerkreis im einzelnen Chip integriert sind, wobei der Display-Touch-Steuerkreis zwei oder mehrere Chips beinhaltet und der Display-Steuerkreis und der Touch-Steuerkreis in unterschiedlichen Chips sind, oder
der Display-Touch-Steuerkreis zwei oder mehrere Chips beinhaltet und jeder der Chips einen Teil des Display-Touchscreens steuert; und optional
wobei der Chip für den Display-Touch-Steuerkreis auf das erste Substrat oder das zweite Substrat in Chip-on-Glass-Modus gebunden ist oder der Chip für den Display-Steuerkreis und der Chip für den Touch-Steuerkreis auf das erste Substrat oder das zweite Substrat in Chip-on-Glass-Modus gebunden sind.

7. Touch-Display-Vorrichtung gemäß Anspruch 1, wobei der Touch-Steuerkreis angepasst ist, um eine Eigenkapazität von jeder der gemeinsamen Elektroden (17, 1101-1120) zu detektieren; und optional
wobei der Touch-Steuerkreis angepasst ist, um die Eigenkapazität einer aktuellen gemeinsamen Elektrode durch ein Verfahren zu detektieren, das Folgendes beinhaltet:
Treiben, als Reaktion auf ein an die aktuelle gemeinsame Elektrode angelegtes Signal, der aktuellen gemeinsamen Elektrode und gemeinsamen Elektroden um die aktuelle gemeinsame Elektrode gleichzeitig, oder
Treiben, als Reaktion auf ein an die aktuelle gemeinsame Elektrode angelegtes Signal, der aktuellen gemeinsamen Elektrode und aller anderen gemeinsamen Elektroden gleichzeitig.

8. Touch-Display-Vorrichtung gemäß Anspruch 7, wobei der Touch-Steuerkreis angepasst ist, um Datenleitungen gleichzeitig als Reaktion auf das an die aktuelle gemeinsame Elektrode angelegte Signal zu treiben.

9. Touch-Display-Vorrichtung gemäß Anspruch 7, wobei der Touch-Steuerkreis angepasst ist, um eine Touch-Position gemäß einer zweidimensionalen Kapazitätsmessanordnung zu bestimmen.

10. Touch-Display-Vorrichtung gemäß Anspruch 1, wobei der Display-Touchscreen eine In-Plane-Switching-Struktur, eine Fringe-Field-Switching-Struktur oder eine Twisted-Nematic-Struktur aufweist.

11. Touch-Display-Vorrichtung gemäß Anspruch 1, wobei die gemeinsame Elektrode (17, 1101-1120) die Form eines regelmäßigen Vielecks besitzt, die gemeinsame Elektrode (17, 1101-1120) die Form eines Rechtecks besitzt oder die gemeinsame Elektrode (17, 1101-1120) die Form eines Kreises besitzt oder die gemeinsame Elektrode die Form einer Ellipse besitzt.

12. Touch-Display-Vorrichtung gemäß Anspruch 1, wobei eine konkave und konvexe Struktur an Kanten der gemeinsamen Elektrode (17, 1101-1120) bereitgestellt ist.

13. Touch-Display-Vorrichtung gemäß Anspruch 1, wobei das Material der Vielzahl von gemeinsamen Elektroden (17, 1101-1120) Indiumzinnoxid oder Graphen ist; und optional wobei jede der Pixeleinheiten des Display-Touchscreens einen Dünnfilmtransistor beinhaltet, die Source des Dünnfilmtransistors mit einem Treibersteuerkreis versehen ist, der angepasst ist, um den Dünnfilmtransistor durch eine Datenleitung zu treiben.

14. Touch-Display-Vorrichtung gemäß Anspruch 1, wobei die Touch-Display-Vorrichtung eine Vielzahl von Touch-Steuerkreisen beinhaltet und jeder der Touch-Steuerkreise mit entsprechenden gemeinsamen Elektroden in der Vielzahl von gemeinsamen Elektroden (17, 1101-1120) verbunden ist; und optional
wobei die Touch-Steuerkreise synchron getaktet werden oder die Touch-Steuerkreise in einem Time-Sharing-Modus arbeiten.

15. Touch-Display-Vorrichtung gemäß Anspruch 1, wobei der Display-Touch-Steuerkreis angepasst ist, um wiederholt einen ersten Schritt auszuführen, der Folgendes beinhaltet:
Durchführen eines Scans durch den Display-Steuerkreis und dann Durchführen eines Scans durch den Touch-Steuerkreis, oder
der Display-Touch-Steuerkreis angepasst ist, um wiederholt einen zweiten Schritt auszuführen, der Folgendes beinhaltet: Durchführen eines Scans durch den Touch-Steuerkreis und dann Durchführen eines Scans durch den Display-Steuerkreis, und optional
wobei der Display-Touch-Steuerkreis konfiguriert ist, um einen durch den Display-Steuerkreis durchgeführten Einzelbild-Scan in eine Vielzahl von Segmenten zu unterteilen und jedes Mal, zwischen den Segmenten, einen Scan durch den Touch-Steuerkreis vor dem Einzelbild-Scan und nach dem durch den Display-Steuerkreis durchgeführten Einzelbild-Scan durchzuführen.

## Revendications

1. Appareil d'affichage tactile, **caractérisé en ce qu'**il comprend :
un écran d'affichage tactile comprenant un premier substrat (11, 21), un second substrat (13, 23), une couche de cristaux liquides (15, 25) et une pluralité d'unités de pixels, où chacune des unités de pixel comprend une électrode de pixel et où la couche de cristaux liquides (15, 25) et les unités de pixel sont situées entre le premier substrat et le second substrat, et l'écran d'affichage tactile comprend en outre une pluralité d'électrodes communes (17, 1101-1120) agencées dans une matrice à deux dimensions, où les électrodes communes (17, 1101-1120) sont agencées de manière à créer en combinaison avec les différentes unités de pixel d'un champ électrique à travers le matériau à cristaux liquides, de manière à contrôler le flux lumineux de chaque unité de pixel, et
un circuit de commande d'affichage tactile comprenant un circuit de commande d'affichage et un circuit de commande tactile, où le circuit d'affichage de commande tactile est relié à la pluralité d'électrodes communes (17, 1101-1120) par l'intermédiaire de fils, et où la pluralité d'électrodes communes (17, 1101-1120) sont connectées à un niveau commun fourni au circuit de commande d'affichage pendant une phase d'affichage, **caractérisé en ce que** chacune de la pluralité d'électrodes communes (17, 1101-1120) est reliée au circuit de commande tactile par l'intermédiaire d'un fil indépendant (501-520) comme électrode de détection tactile lors d'une phase de détection tactile.

2. Appareil d'affichage tactile selon la revendication 1, où les fils (501-520) sont disposés dans une couche pourvue de la pluralité d'électrodes communes (1101-1120) ou bien les fils (501-503) sont disposés dans une couche différente d'une couche pourvue de la pluralité d'électrodes communes et sont connectées à la pluralité d'électrodes communes par des trous traversants.

3. Appareil d'affichage tactile selon la revendication 1, où les fils (501-520) sont disposés dans une couche pourvue de lignes de données, et sont reliés à la pluralité d'électrodes communes (17, 1101-1120) par des trous traversants.

4. Appareil d'affichage tactile selon la revendication 1, où les fils (501-520) sont disposés dans une couche munie des électrodes de pixel et sont reliées à la pluralité d'électrodes communes par des trous traversants.

5. Appareil d'affichage tactile selon la revendication 1, où les fils (501-520) sont disposés juste sous la matrice noire.

6. Appareil d'affichage tactile selon la revendication 1, où le circuit d'affichage de commande tactile (29) est une simple puce, et le circuit de commande d'affichage et le circuit de commande tactile sont intégrés dans la même puce, le circuit d'affichage de commande tactile comprend deux ou plusieurs puces, et le circuit de commande d'affichage et le circuit de commande tactile sont dans différentes puces, ou bien
le circuit écran de contrôle tactile comprend deux ou plusieurs puces, et chacune des puces contrôle une partie de l'écran d'affichage tactile; et éventuellement.
où la puce prévue pour le circuit de commande tactile est collée sur le premier substrat ou le second substrat dans un mode puce sur verre, ou bien la puce prévue pour le circuit de commande d'affichage et la puce prevue pour le circuit de commande tactile sont collées sur le premier substrat ou le second substrat dans un mode puce sur verre.

7. Appareil d'affichage tactile selon la revendication 1, où le circuit de commande tactile est adapté pour détecter une capacité propre de chacune des électrodes communes (17, 1101-1120) ; et éventuellement
où le circuit de commande tactile est adapté pour détecter la capacité propre d'une électrode commune actuelle par un procédé comprenant :
l'entraînement, en réponse à un signal appliqué à l'électrode de courant commune, de l'électrode commune et des électrodes communes de courant autour de l'électrode commune de courant en même temps, ou
l'entraînement, en réponse à un signal appliqué à l'électrode de courant commune, de l'électrode commune et de toutes les autres électrodes communes de courant en même temps.

8. Appareil d'affichage tactile selon la revendication 7, où le circuit de commande tactile est adapté pour entraîner simultanément les lignes de données en réponse au signal appliqué à l'électrode commune de courant.

9. Appareil d'affichage tactile selon la revendication 7, où le circuit de commande tactile est adapté pour déterminer une position tactile en fonction d'une matrice de détection de capacité en deux dimensions.

10. Appareil d'affichage tactile selon la revendication 1, où l'écran d'affichage tactile présente une structure dans le plan de commutation, une structure de commutation de champ de dispersion ou d'une structure nématique en hélice.

11. Appareil d'affichage tactile selon la revendication 1, où l'électrode commune (17, 1101-1120) est sous forme de polygone régulier, l'électrode commune (17, 1101-1120) se présente sous la forme d'un rectangle ou l'électrode commune (17, 1101-1120) est sous forme d'un cercle, ou l'électrode commune est sous forme d'ellipse.

12. Appareil d'affichage tactile selon la revendication 1, où la structure concave et convexe est prévue au niveau des bords de l'électrode commune (17, 1101-1120).

13. Appareil d'affichage tactile selon la revendication 1, où le matériau de la pluralité d'électrodes communes (17, 1101-1120) est de l'oxyde d'étain d'indium ou le graphème ; et éventuellement
où chacune des unités de pixel de l'écran d'affichage tactile comprend un transistor à couche mince, la source du transistor à couche mince est pourvue d'un circuit d'entraînement adapté pour entraîner le transistor à couche mince à travers une ligne de données.

14. Appareil d'affichage tactile selon la revendication 1, où l'appareil d'affichage tactile comprend une pluralité de circuits de commande tactile, et chacun des circuits de commande tactile est relié à des électrodes communes correspondant à la pluralité d'électrodes communes (17, 1101-1120) ; et éventuellement
où les circuits de commande tactile sont cadencés de façon synchrone, ou bien les circuits de commande tactile fonctionnent en mode de partage du temps.

15. Appareil d'affichage tactile selon la revendication 1, où le circuit d'affichage de commande tactile est adapté pour exécuter de manière répétée une première étape comprenant : la réalisation d'un balayage par le circuit de commande d'affichage, puis la réalisation d'un balayage par le circuit de commande tactile, ou bien
le circuit de commande écran tactile est adapté pour exécuter de manière répétée une seconde étape comprenant : la réalisation d'un balayage par le circuit de commande tactile, puis la réalisation d'un balayage par le circuit de commande d'affichage ; et éventuellement
où le circuit d'affichage de commande tactile est configuré pour diviser un balayage de trame réalisé par le circuit de commande d'affichage en une pluralité de segments, et réaliser un balayage par le circuit de commande tactile à chaque fois avant le balayage de trame, entre les segments, et après le balayage de trame réalisé par le circuit de commande d'affichage.
